# EUROPEAN PATENT SPECIFICATION

(11) **EP 3 457 639 B1**
(45) Date of publication and mention of the grant of the patent: **07.07.2021**
(21) Application number: 16903418.8
(22) Date of filing: 30.05.2016
(51) Int. Cl.: H04L 12/66, H04W 36/00, H04W 76/27, H04W 28/02

(54) **COMMUNICATION METHOD, DEVICE AND SYSTEM**
KOMMUNIKATIONSVERFAHREN, -VORRICHTUNG UND -SYSTEM
PROCÉDÉ, DISPOSITIF ET SYSTÈME DE COMMUNICATION

(43) Date of publication of application: 20.03.2019
(73) Proprietor: Huawei Technologies Co., Ltd., Longgang District Shenzhen, Guangdong 518129 (CN)
(72) Inventor: WANG, Yuan, Shenzhen Guangdong 518129 (CN); CHEN, Zhongping, Shenzhen Guangdong 518129 (CN); MA, Jingwang, Shenzhen Guangdong 518129 (CN)
(74) Representative: Gill Jennings & Every LLP
(86) International application number: PCT/CN2016/083972
(87) International publication number: WO 2017/206030

(56) References cited:
- WO-A1-2015/085273
- CN-A- 102 972 086
- CN-A- 104 115 454
- US-A1- 2014 073 365
- NOKIA ET AL: "Discussion of RRC States in NR", 3GPP DRAFT; R2-163441 DISCUSSION OF RRC STATES IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051104944, Retrieved from the Internet: URL:http://www.3gpp.org/ftp/Meetings_3GPP_ SYNC/RAN2/Docs/ [retrieved on 2016-05-22]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.4.0, 27 April 2016 (2016-04-27), pages 1-92, XP051123441, [retrieved on 2016-04-27]

## Description

### TECHNICAL FIELD

The present invention relates to the field of wireless communications technologies, and in particular, to a communication method, and a communications apparatus and system.

### BACKGROUND

With evolution of a mobile communications network and continuous emergence of a large quantity of new applications, different service requirements are gradually generated in different application fields. Generally, people always pursue a mobile communications system with three features: high bandwidth, a low latency, and high reliability. In a current mobile communications network, User Equipment (UE) needs to perform a plurality of signaling interactions to restore from an idle state to a connected state. Consequently, a latency is relatively high. In view of this, a new UE mobility management state, namely, a suspend state (Suspend State) is introduced into the 3rd Generation Partnership Project (3GPP).

In a suspend state, after an air interface resource between UE and an access network is released, the UE and the access network store a context of an air interface connection, and a context (Context) of the UE and a network resource that carries a service, such as a packet data network (PDN) connection and a bearer, continue to be retained in a core network. In the suspend state, the air interface resource between the UE and the access network is released, so that energy and power can be saved. In addition, a radio access network node (RAN Node) and the core network retain all connections and contexts of the UE. Therefore, when data arrives, the UE can fast restore the air interface connection between the UE and the access network through simplified signaling interaction, to establish a data connection without re-establishing a connection and a context. Therefore, the suspend state can well meet a low latency requirement.

Because the network side retains all the connections and user contexts of the UE in the suspend state, the network side considers that the UE is still in a connected state (Connected State). In other words, a signaling connection and a user plane connection between the radio access network node and the core network are in an active state. Once the UE moves away from a coverage area of the RAN node, the core network needs to perform a handover procedure to update the original signaling connection and user plane connection. If the UE moves excessively fast, handover from one RAN node to another RAN node frequently occurs, and the core network needs to frequently perform the handover procedure to maintain the suspend state of the UE. Consequently, signaling load is relatively large and network performance is degraded.

Nokia et al: "Discussion of RRC States in NR",3GPP DRAFT; R2-163441 Discussion Of RRC States In NR, 3rd Generation Partnership Project (3GPP), Mobile Competence Centre; 650, Route Des Lucioles; F-06921 Sophia-Antipolis Cedex; France vol. RAN WG2, no. Nanjing, China; 20160523- 20160527 22 May 2016 discusses RRC states in 5G use cases.

### SUMMARY

This application describes a communication method, and a communications apparatus and system, to resolve a prior-art problem that network performance is degraded due to relatively large signaling load caused because a suspend state of user equipment is maintained in a communications system. Aspects of the invention are provided according to the claims.

According to the technical solutions provided in the embodiments of the present invention, the CPE determines whether the suspend function of the UE is allowed to be enabled. In this way, the suspend function of the UE may not be allowed to be enabled for those cases in which signaling load may be relatively large because the suspend state of the UE is maintained, so as to reduce signaling load and improve network performance.

### BRIEF DESCRIPTION OF DRAWINGS

To describe embodiments of the present invention more clearly, the following briefly describes the accompanying drawings required for describing the embodiments. Apparently, the accompanying drawings in the following description show merely some embodiments of the present invention, and a person of ordinary skill in the art may still derive another drawing from these accompanying drawings without creative efforts.
FIG. 1 is a schematic diagram of a communications system according to an embodiment of the present invention;
FIG. 2 is a schematic diagram of a communication method according to an embodiment of the present invention;
FIG. 3 is a schematic diagram of a method of a technical implementation 1 according to an embodiment of the present invention;
FIG. 4 is a schematic diagram of a method of a technical implementation 2 according to an embodiment of the present invention;
FIG. 5 is a schematic diagram of a method of a technical implementation 3 according to an embodiment of the present invention;
FIG. 6 is a schematic diagram of a method of a technical implementation 4 according to an embodiment of the present invention;
FIG. 7 is a schematic diagram of a method of a technical implementation 5 according to an embodiment of the present invention;
FIG. 8 is a schematic structural diagram of a control plane node according to an embodiment of the present invention;
FIG. 9 is a schematic structural diagram of a radio access network node according to an embodiment of the present invention;
FIG. 10 is a schematic structural diagram of user equipment according to an embodiment of the present invention;
FIG. 11 is a schematic structural diagram of a control plane node according to an embodiment of the present invention;
FIG. 12 is a schematic structural diagram of a radio access network node according to an embodiment of the present invention; and
FIG. 13 is a schematic structural diagram of user equipment according to an embodiment of the present invention.

### DESCRIPTION OF EMBODIMENTS

The following clearly describes the technical solutions in the embodiments of the present invention with reference to the accompanying drawings in the embodiments of the present invention.

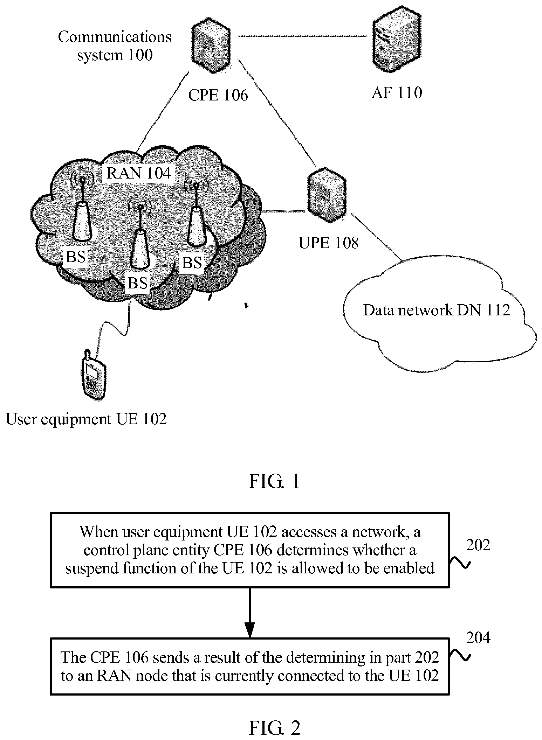

To resolve a prior-art problem that network performance is degraded due to relatively large signaling load caused because a suspend state of UE is maintained in a communications system, the embodiments of the present invention propose a solution based on a communications system shown in FIG. 1, to improve network performance of the communications system. As shown in FIG. 1, an embodiment of the present invention provides a communications system 100. The communications system 100 may include the following communications entities:
at least one UE 102;
at least one radio access network (Radio Access Network: RAN) 104, which may include a base station (Base Station: BS), a distributed base station, a cloud radio access network (Cloud RAN: CRAN) device, or an access network device including both a radio network controller (Radio Network Controller: RNC) and a base station, where these devices are collectively referred to as a radio access network node RAN node in this specification, and the base station BS is merely used as an example in FIG. 1;
a control plane entity (CPE) 106, which is an entity configured to provide a control plane network function, where the CPE 106 is responsible for executing the control plane network function; and the CPE 106 may be a physical network element such as a mobility management entity (MME) or a serving GPRS support node (SGSN), or may be a virtual machine or a software package;
a user plane entity (UPE) 108, which is an entity configured to provide a user plane network function, where the UPE 108 is responsible for executing the user plane network function; and the UPE 108 may be a physical network element such as a serving gateway (S-GW) or a PDN gateway (P-GW), or may be a virtual machine or a software package;
an application function (AF) entity 110, configured to provide the CPE 106 with a service requirement and a policy that are required for an application, for example, a service level agreement (SLA), where the CPE 106 may determine a service policy such as quality of service (QoS) for the UE according to the service requirement and the policy that are provided by the AF entity 110; and the AF entity 110 may be further configured to provide an application service, and the AF entity 110 may be an application server configured to provide a user access service, for example, a QQ server; and
a data network (DN) 112, which may be various packet data networks or non-packet data networks, for example, the Internet or a local data network of an operator.

In the communications system 100 described in FIG. 1 in this embodiment of the present invention, the UE 102 accesses a network by using the RAN 104, and the CPE 106 and the UPE 108 respectively provide the control plane network function and the user plane network function for the UE 102, so that the UE 102 can be connected to the DN 112 by using the UPE 108 and obtain a corresponding service.

In this embodiment of the present invention, the communications system 100 may be various 3GPP communications systems, for example, a general packet radio system (GPRS), a universal mobile telecommunications system (UMTS), and an evolved packet system. The terms "system" and "network" can be interchanged. In addition, the communications system 100 is further applicable to a future 3GPP communications system or another mobile communications system defined by a standard organization, for example, a next generation communication system (NexGen). The communications system 100 may alternatively be a non-3GPP communications system. System architectures and business scenarios described in the embodiments of the present invention aim to more clearly describe the technical solutions in the embodiments of the present invention, but are not intended to limit the technical solutions provided in the embodiments of the present invention. A person of ordinary skill in the art may know that as network architectures evolve and a new business scenario emerges, the technical solutions provided in the embodiments of the present invention are further applicable to a similar technical problem.

In this embodiment of the present invention, the radio access network RAN 104 may be various radio access technology (radio access technology, RAT) systems, for example, a Code Division Multiple Access (CDMA) system, a Time Division Multiple Access (TDMA) system, a Frequency Division Multiple Access (FDMA) system, an orthogonal frequency division multiple access (OFDMA) system, a single carrier frequency division multiple access (SC-FDMA) system, and another system. The terms "system" and "network" can be interchanged. A radio technology such as Universal Terrestrial Radio Access (UTRA) or CDMA2000 may be implemented in the CDMA system. UTRA may include a Wideband CDMA (WCDMA) technology and another technology transformed from CDMA. CDMA2000 may cover interim standards (IS) 2000 (IS-2000), IS-95, and IS-856. A radio technology such as a Global System for Mobile Communications (GSM) may be implemented in the TDMA system. Radio technologies such as evolved Universal Terrestrial Radio Access (E-UTRA), Ultra Mobile Broadband (UMB), IEEE 802.11 (Wi-Fi), IEEE 802.16 (WiMAX), IEEE 802.20, and Flash OFDMA may be implemented in the OFDMA system. UTRA is corresponding to UMTS, and E-UTRA is corresponding to an evolved version of UMTS. A new version of UMTS, namely, E-UTRA, is used in 3GPP Long Term Evolution (LTE) and various versions evolved based on LTE. In addition, the communications system 100 is further applicable to a future-oriented communications technology. System architectures and business scenarios described in the embodiments of the present invention aim to more clearly describe the technical solutions in the embodiments of the present invention, but are not intended to limit the technical solutions provided in the embodiments of the present invention. A person of ordinary skill in the art may know that as network architectures evolve and a new business scenario emerges, the technical solutions provided in the embodiments of the present invention are further applicable to a similar technical problem.

In this embodiment of the present invention, the RAN node 104 is an apparatus that is deployed in a radio access network and that is configured to provide a wireless communication function for UE. The RAN node 104 may include macro base stations, micro base stations (also referred to as small cells), relay stations, access points, and the like in various forms. A device with a base station function may have different names in systems that use different radio access technologies. For example, the device is referred to as an evolved NodeB (evolved NodeB, eNB or eNodeB) in an LTE system, and is referred to as a NodeB (NodeB) in a 3rd Generation (3G) system. Alternatively, the RAN node 104 may be an apparatus that is applicable to a future-oriented communications technology and that provides a wireless communication function for UE.

The UE in this embodiment of the present invention may include various handheld devices, in-vehicle devices, wearable devices, or computing devices that have a wireless communication function, or another processing device connected to a wireless modem. The UE may also be referred to as a mobile station (MS for short), a terminal, or a terminal device, or the UE may include a subscriber unit, a cellular phone, a smartphone, a wireless data card, a personal digital assistant (PDA) computer, a tablet computer, a wireless modem, a handheld device, a laptop computer, a cordless phone, a wireless local loop (WLL) station, a machine type communication (MTC) terminal, or the like. For ease of description, in all embodiments of the present invention, the devices mentioned above are collectively referred to as UE.

All messages exchanged between the communications entities in this embodiment of the present invention, such as a context request message, a context response message, an initial context setup message, an initial context complete setup message, an attach accept message, a NAS request message, a path switch request message, and a path switch request ACK message are merely for illustration purposes, and may be implemented by using other messages defined in different mobile communications standards (such as a 2G mobile communications system, a 3G mobile communications system, a 4G mobile communications system, or a 5G mobile communications system), or may be implemented by using a non-standard message that is defined by an operator or a device manufacturer when the operator or the device manufacturer uses an actual mobile communications system.

Based on the communications system shown in FIG. 1 in the embodiment of the present invention, referring to FIG. 2, an embodiment of the present invention provides a communication method. The communication method may include the following steps.

Step 202: When the user equipment UE 102 accesses a network, the control plane entity CPE 106 determines whether a suspend function of the UE 102 is allowed to be enabled, that is, whether a suspend state of the UE 102 is allowed to be used.

The CPE 106 may determine, based on information about a service requested by the UE 102, device type information of the UE 102, terminal capability information of the UE 102, network capability information, movement track information of the UE 102, or the like, whether the suspend function of the UE 102 is allowed to be enabled. The network capability information may be capability information of a network device in the network, for example, information indicating whether a radio access network node RAN node that currently provides a service for the UE supports the suspend function. If the current RAN node does not support the suspend function, it may be considered that the current network does not support the suspend function. Certainly, the CPE 106 may also perform determining based on a combination of some of the foregoing information. This is not limited in the present invention.

Step 204: The CPE 106 sends a result of the determining in Step 202 to an RAN node that is currently connected to the UE 102, and the RAN node may determine, based on the result of the determining, whether to enable the suspend function of the UE 102.

It should be noted that when the result of the determining sent by the CPE 106 indicates that the RAN node is allowed to enable the suspend function of the UE 102, the RAN node may enable the suspend function of the UE 102 when a specific trigger condition is met, that is, instruct the UE 102 to enter the suspend state. If the result of the determining sent by the CPE 106 indicates that the RAN node is not allowed to enable the suspend function of the UE 102, even if the trigger condition is met or the UE 102 actively initiates a request to enter the suspend state, the RAN node may not perform an operation of enabling the suspend function of the UE 102.

Certainly, alternatively, the CPE 106 may directly send the result of the determining to the UE 102, and the UE 102 determines, based on the result of the determining, whether to enable the suspend function of the UE 102. Similarly, if the result of the determining sent by the CPE 106 indicates that the suspend function of the UE 102 is allowed to be enabled, the UE 102 may enter the suspend state when a specific trigger condition is met. If the result of the determining sent by the CPE 106 indicates that the suspend function of the UE 102 is not allowed to be enabled, the UE 102 does not enter the suspend state even if the trigger condition is met.

In this embodiment of the present invention, the result of the determining sent by the CPE 106 includes indication information used to indicate whether the suspend function is allowed to be enabled. In specific implementation, the indication information may be a field. For example, the field is a specific value to indicate that the suspend function is allowed to be enabled, or the field is another specific value to indicate that the suspend function is not allowed to be enabled. A specific definition of a field value is not limited in this embodiment of the present invention.

Optionally, when the result of the determining of the CPE 106 is that the suspend function of the UE 102 is allowed to be enabled, the result of the determining may further include suspension trigger condition information, used to indicate a condition under which the RAN node or the UE 102 can trigger entering of the suspend state. For example, the suspension trigger condition information may be duration information. The RAN node or the UE 102 may set a timer based on the duration information. When a time period in which there is no data transmission between the RAN node and the UE 102 exceeds duration corresponding to the duration information, that is, the timer expires, the RAN node or the UE 102 may request to enter the suspend state.

Optionally, when the result of the determining of the CPE 106 is that the suspend function of the UE 102 is allowed to be enabled, and the CPE 106 sends the result of the determining to the RAN node, the result of the determining may further include network topology information of the RAN node. The RAN node may determine, by using the network topology information, an area in which the suspend state of the UE 102 can be maintained, for example, a list (Suspend Cell List) of cells in which the suspend state of the UE can be maintained. In other words, the suspend state of the UE can be maintained in these cells. When the UE 102 moves within the area, the UE 102 can maintain the suspend state, and the RAN node that is currently connected to the UE 102 does not need to notify a core network. It should be noted that the suspend cell list may include cells of different RAN nodes. In this case, the different RAN nodes need to support an X2 interface.

Compared with the prior art in which suspend functions of all UEs are allowed to be enabled by default, in the foregoing embodiment of the present invention, the CPE determines, based on service information, device type information of the UE, terminal capability information, network capability information, movement track information of the UE, or the like, whether the suspend function of the UE is allowed to be enabled. According to the solution in this embodiment of the present invention, the suspend function of the UE may not be allowed to be enabled for those cases in which signaling load may be relatively large because the suspend state of the UE is maintained, so as to reduce signaling load and improve network performance.

In the foregoing embodiment of the present invention, in a case in which the CPE determines that the suspend function of the UE is allowed to be enabled, the CPE may further add the suspension trigger condition information to the result of the determining, to indicate the condition under which the suspend function of the UE can be enabled, that is, set a time at which the UE triggers entering of the suspend state, so as to avoid blind triggering of the suspend state of the UE, and reduce signaling load required for maintaining the suspend state of the UE, thereby improving network performance.

In addition, the result of the determining sent by the CPE may further include the network topology information of the RAN node to set the area in which the suspend state of the UE can be maintained. Within the area, the UE can maintain the suspend state and does not need to notify the core network. This can avoid a problem that the UE still needs to maintain the suspend state outside the area, so as to reduce improper signaling load and improve network performance.

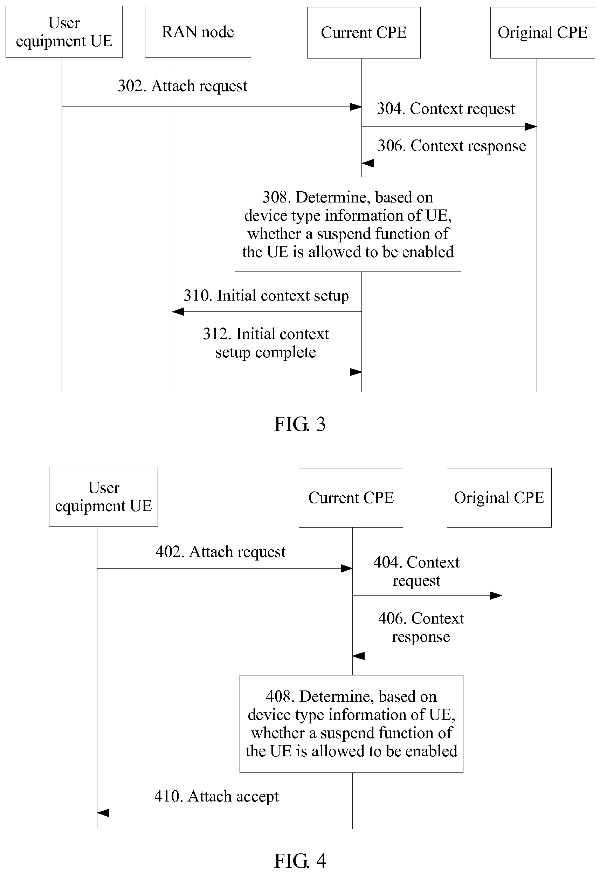

With reference to FIG. 3, the following describes a technical implementation 1 provided in an embodiment of the present invention.

In the technical implementation 1, a CPE determines, based on device type information of UE, whether a suspend function of the UE is allowed to be enabled, and directly sends a result of the determining to an RAN node. The device type information of the UE may be specifically a UE usage type (UE Usage Type) in user subscription data, and a device type value may be specifically mobile broadband (MBB) UE, Cellular Internet of Things (CIoT) UE, or the like.

Step 302: User equipment UE sends an access request message such as an attach request message to a current control plane entity CPE that currently provides a service for the UE, where the access request message includes identification information of the UE.

It should be noted that the identification information of the UE may be a permanent identifier allocated by an operator to the UE, such as an international mobile subscriber identity (IMSI); or the identification information of the UE may be a temporary identifier allocated by a network to the UE, such as a globally unique temporary identity (GUTI); or the identification information of the UE may be information used to derive an identifier of the UE, which may be specifically information that is allocated by a network to the UE and that may be used to identify the UE, such as a tunnel endpoint identifier (TEID) or an IP address.

Step 304: The current CPE sends a context request message to an original CPE that previously provides a service for the UE, to request to obtain a context (Context) of the UE.

Step 306: The original CPE sends a context response message to the current CPE, and sends the context of the UE to the current CPE, where the context of the UE may include device type information of the UE.

Certainly, alternatively, there may be a case in which the current CPE cannot successfully obtain the context of the UE from the original CPE. For example, the current CPE cannot be connected to the original CPE, or the original CPE has deleted the context of the UE. In this case, the current CPE may send a subscription data request message to a subscription database such as a home subscriber server (Home Subscriber Server, HSS), to request to obtain subscription data of the UE, and the HSS that receives the subscription data request message sends the subscription data of the UE to the current CPE, where the subscription data may include the device type information of the UE.

Optionally, there is a case in which the original CPE and the current CPE are a same CPE entity. For example, the UE is still in a service area of the original CPE when sending the access request message. In this case, the current CPE does not initiate the context request message, but obtains the context of the UE from data locally stored in the CPE.

Step 308: The current CPE determines, based on the device type information of the UE, whether a suspend function of the UE is allowed to be enabled. In specific implementation, the current CPE can know a terminal type of the UE based on the device type information of the UE. The current CPE may allow, through setting, suspend functions of user equipments of some specific types to be enabled, and may not allow a suspend function of user equipment of another specific type to be enabled. A correspondence between the device type information of the UE and whether the suspend function is allowed to be enabled may be pre-configured on the current CPE.

Step 310: The current CPE sends, by using an initial context setup message, a result of the determining in Step 308 to an RAN node that is currently connected to the UE. Specifically, there may be the following two cases: 310 (a) and 310 (b).

Step 310 (a): If the current CPE determines, based on the device type information of the UE in Step 308, that the suspend function of the UE is allowed to be enabled, the current CPE sends the initial context setup message to the RAN node that is currently connected to the UE, where the initial context setup message includes indication information indicating that the suspend function is allowed to be enabled, which is used to indicate that the RAN node can enable the suspend function for the UE.

Optionally, the message sent by the current CPE to the RAN node may further include suspension trigger condition information, used to indicate a condition under which the RAN node can trigger enabling of the suspend function of the UE, that is, a condition for triggering the UE to enter a suspend state. For example, the suspension trigger condition information may be duration information. The RAN node may set a timer based on the duration information. When a time period in which there is no data transmission between the RAN node and the UE exceeds duration corresponding to the duration information, that is, the timer expires, the RAN node may trigger the UE to enter the suspend state.

Optionally, the message sent by the current CPE to the RAN node may further include network topology information of the RAN node. The RAN node may determine, by using the network topology information, an area in which the suspend state of the UE can be maintained, for example, a list (Suspend Cell List) of cells in which the suspend state of the UE can be maintained. In other words, the suspend state of the UE can be maintained in these cells. When the UE moves within the area, the UE can maintain the suspend state, and the RAN node that is currently connected to the UE does not need to notify a core network.

Step 310 (b): As another possible result of the determining performed by the current CPE, if the current CPE determines, based on the device type information of the UE in Step 308, that the suspend function of the UE is not allowed to be enabled, the message sent by the current CPE to the RAN node that is currently connected to the UE includes indication information indicating that the suspend function is not allowed to be enabled, which is used to indicate that the RAN node cannot enable the suspend function for the UE.

Step 312: Regardless of 310 (a) or 310 (b), the RAN node may send an initial context setup complete message to the current CPE, where as a response to the initial context setup message, the initial context setup complete message is used to indicate that the RAN node has received indication information indicating whether the suspend function of the UE is allowed to be enabled.

In the technical implementation 1 of the present invention, the CPE determines, based on the device type information of the UE, whether the suspend function of the UE is allowed to be enabled, so as to reduce signaling load required for maintaining the suspend state of the UE, thereby improving network performance. When the suspend function of the UE is allowed to be enabled, the CPE may further set, by using the suspension trigger condition information, a time at which the UE triggers entering of the suspend state, to avoid blindly triggering the UE to enter the suspend state, and reduce signaling load required for maintaining the suspend state of the UE, thereby improving network performance; and may further set, by using the network topology information, the area in which the suspend state of the UE can be maintained, so that a suspension mechanism can be more effectively used, to further reduce signaling load.

With reference to FIG. 4, the following describes a technical implementation 2 provided in an embodiment of the present invention.

In the implementation 2, similar to the implementation 1 corresponding to FIG. 3, a current CPE determines, based on device type information of UE, whether a suspend function of the UE is allowed to be enabled; and different from the implementation 1, the current CPE directly sends a result of the determining to the UE.

Implementations of Steps 402 to 408 in the implementation 2 may be similar to those of Steps 302 to 308 in the implementation 1 in FIG. 3, and details are not described herein.

Step 410: The current CPE sends a result of the determining in Step 408 to the UE by using an attach accept message. Specifically, there may be the following two cases: 410 (a) and 410 (b).

Step 410 (a): If the current CPE determines, based on the device type information of the UE in Step 408, that the suspend function of the UE is allowed to be enabled, the current CPE sends the attach accept message to the UE, where the attach accept message includes indication information indicating that the suspend function is allowed to be enabled, which is used to indicate that the UE can enable the suspend function.

Optionally, the attach accept message may further include suspension trigger condition information, used to indicate a condition under which the UE can trigger entering of a suspend state. For example, the suspension trigger condition information may be duration information. The UE may set a timer based on the duration information. When a time period in which there is no data transmission between the RAN node and the UE exceeds duration corresponding to the duration information, that is, the timer expires, the UE may request to enter the suspend state.

Step 410 (b): As another possible result of the determining performed by the current CPE, if the current CPE determines, based on the device type information of the UE in Step 408, that the suspend function of the UE is not allowed to be enabled, the current CPE sends the attach accept message to the UE, where the attach accept message includes indication information indicating that the suspend function is not allowed to be enabled, which is used to indicate that the UE cannot enable the suspend function.

In the technical implementation 2 of the present invention, the CPE determines, based on the device type information of the UE, whether the suspend function of the UE is allowed to be enabled, so as to reduce signaling load required for maintaining the suspend state of the UE, thereby improving network performance. When the suspend function of the UE is allowed to be enabled, the CPE may further set, by using the suspension trigger condition information, a time at which the UE triggers the suspend state, to avoid blindly triggering the UE to enter the suspend state, and reduce signaling load required for maintaining the suspend state of the UE, thereby improving network performance.

In the technical implementations 1 and 2 of the present invention, the current CPE determines, based on the device type information of the UE, whether the suspend function of the UE is allowed to be enabled. As a variation of the technical implementations of the present invention, the current CPE may further determine, based on service information of the UE, whether the suspend function of the UE is allowed to be enabled. The service information of the UE may be obtained by the current CPE from a NAS request message received by the UE. The service information of the UE may be information used to identify a service used by the UE, such as an access point name (Access Point Name: APN) or a service type. The service type may be used to specify an application ID corresponding to a service for which the UE needs to apply. A correspondence between the service information and whether the suspend function is allowed to be enabled may be pre-configured on the CPE. For example, if a service requested by the UE is a service strongly correlated to a location, the CPE determines that the suspend function of the UE is not allowed to be enabled; or if a service requested by the UE is not a service strongly correlated to a location, the CPE determines that the suspend function of the UE is allowed to be enabled. The service strongly correlated to a location may be a local message service, a local advertisement push service, a local video stream service, or the like. These services are strongly correlated to a current location of the UE. The service is interrupted once the UE leaves the current location at which a service can be provided, such as a shopping mall or a library. A local advertisement push service provided within a specific shopping mall is used as an example. Once the UE leaves the shopping mall, the UE cannot continue enjoying the local advertisement push service provided within the shopping mall.

In the suspend state, a core network side usually considers by default that the UE is in an original cell, and then it is determined, by using a service type of a service requested by the UE, whether the suspend function of the UE is allowed to be enabled, so as to avoid a problem that the suspend function of the UE is still enabled when the service requested by the UE is a service strongly correlated to a location, and avoid a problem that service quality is reduced or the service is unavailable when a UE location is actually unknown.

Certainly, there are different cases in which a network device in a mobile communications network such as the RAN node supports a suspension mechanism and does not support a suspension mechanism. The CPE may further determine, based on network capability information such as capability information of the network device in the mobile communications network, whether the suspend function of the UE is allowed to be enabled. The network capability information may be information indicating whether the RAN node that currently provides a service for the UE supports the suspend function. If the current RAN node does not support the suspend function, it may be correspondingly considered that a current network does not support the suspend function. In this case, the suspend function of the UE is not allowed to be enabled.

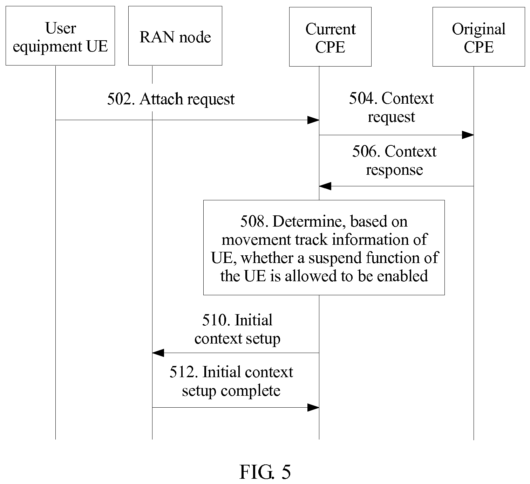

With reference to FIG. 5, the following describes a technical implementation 3 provided in an embodiment of the present invention.

In the technical implementation 3, a CPE determines, based on movement track information of UE, whether a suspend function of the UE is allowed to be enabled, and sends a result of the determining to an RAN node that is currently connected to the UE.

Step 502: User equipment UE sends an access request message such as an attach request message to a current control plane entity CPE that currently provides a service for the UE, where the access request message includes identification information of the UE.

It should be noted that the identification information of the UE may be a permanent identifier allocated by an operator to the UE, such as an IMSI; or the identification information of the UE may be a temporary identifier allocated by a network to the UE, such as a GUTI; or the identification information of the UE may be information used to derive an identifier of the UE, which may be specifically information that is allocated by a network to the UE and that may be used to identify the UE, such as a TEID or an IP address.

Step 504: The current CPE sends a context request message to an original CPE that previously provides a service for the UE, to request to obtain a context (Context) of the UE.

Optionally, there is a case in which the original CPE and the current CPE are a same CPE entity. For example, the UE is still in a service area of the original CPE when sending the access request message. In this case, the current CPE does not initiate the context request message, but obtains the context of the UE from data locally stored in the CPE.

Step 506: The original CPE sends a context response message to the current CPE, and sends the context of the UE to the current CPE, where the context of the UE may include movement track information of the UE.

Step 508: The current CPE determines, based on the movement track information of the UE, whether a suspend function of the UE is allowed to be enabled.

The movement track information of the UE may be historical movement track information of the UE that is stored in the current CPE, or may be historical movement track information of the UE that is obtained by the current CPE from the original CPE, or a combination thereof. A correspondence between the movement track information and whether the suspend function is allowed to be enabled or a determining rule may be pre-configured on the current CPE.

When the UE is in a mobile state, due to a limited service area of a cell, the RAN node, or the CPE, when the UE moves away from the service area, an entity that previously provides a service for the UE, such as the RAN node or the CPE can no longer provide a service for the UE, and handover to a new communications entity is needed to provide a continuous service for the UE, that is, cases of handover from one cell to another cell, handover from one RAN node to another RAN node, handover from one CPE to another CPE, and the like in a mobile communications network. If the movement track information of the UE indicates that the UE moves excessively fast or is frequently handed over, the current CPE may determine that the suspend function of the UE is not allowed to be enabled, to avoid frequently performing a handover procedure to maintain a suspend state of the UE. Correspondingly, if a movement track of the UE indicates that the UE is relatively fixed or is rarely handed over, the current CPE may determine that the suspend function of the UE is allowed to be enabled.

Step 510: The current CPE sends, by using an initial context setup message, a result of the determining in Step 508 to an RAN node that is currently connected to the UE. Specifically, there may be the following two cases: 510 (a) and 510 (b).

Step 510 (a): If the current CPE determines, in Step 508, that the suspend function of the UE is allowed to be enabled, the message sent by the current CPE to the RAN node that is currently connected to the UE includes indication information indicating that the suspend function is allowed to be enabled, which is used to indicate that the RAN node can enable the suspend function for the UE.

Optionally, the message sent by the current CPE to the RAN node may further include suspension trigger condition information, used to indicate a condition under which the RAN node can trigger the UE to enter the suspend state; or include network topology information of the RAN node, used to set an area in which the suspend state of the UE can be maintained.

Step 510 (b): As another possible result, if the current CPE determines, in Step 508, that the suspend function of the UE is not allowed to be enabled, the current CPE sends the initial context setup message to the RAN node that is currently connected to the UE, where the initial context setup message includes indication information indicating that the suspend function is not allowed to be enabled.

Step 512: The RAN node sends an initial context setup complete message to the current CPE, to indicate that the RAN node has received indication information indicating whether the suspend function of the UE is allowed to be enabled.

In the technical implementation 3 of the present invention, the CPE determines, based on the movement track information of the UE, whether the suspend function of the UE is allowed to be enabled, to avoid enabling suspend functions for some user equipments that have excessively large movement areas or are frequently handed over, thereby reducing signaling load and improving network performance. When the suspend function of the UE is allowed to be enabled, the CPE may set the suspension trigger condition information, to avoid blind triggering of the suspend state of the UE; and may further set, by using the network topology information, the area in which the suspend state of the UE can be maintained, to further reduce unnecessary signaling load and improve network performance.

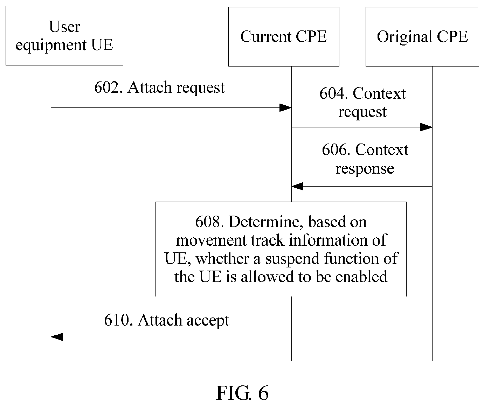

With reference to FIG. 6, the following describes a technical implementation 4 provided in an embodiment of the present invention.

In the implementation 4, similar to the implementation 3 corresponding to FIG. 5, a current CPE determines, based on movement track information of UE, whether a suspend function of the UE is allowed to be enabled; and different from the implementation 3, the current CPE sends a result of the determining to the UE.

Implementations of Steps 602 to 608 in the implementation 4 may be similar to those of Steps 502 to 508 in the implementation 3 in FIG. 5, and details are not described herein.

Step 610: The current CPE sends a result of the determining in Step 608 to the UE by using an attach accept message. Specifically, there may be the following two cases: 610 (a) and 610 (b).

Step 610 (a): If the current CPE determines, in Step 608, that the suspend function of the UE is allowed to be enabled, the current CPE sends the attach accept message to the UE, where the attach accept message includes indication information indicating that the suspend function is allowed to be enabled, which is used to indicate that the UE can enable the suspend function.

Optionally, the attach accept message may further include suspension trigger condition information, used to indicate a condition under which the UE can trigger entering of a suspend state. The suspension trigger condition information may be duration information. The UE may set a timer based on the duration information. When a time period in which there is no data transmission between the RAN node and the UE exceeds duration corresponding to the duration information, that is, the timer expires, the UE may request to enter the suspend state.

Step 610 (b): As another possible result, if the current CPE determines, in Step 608, that the suspend function of the UE is not allowed to be enabled, the current CPE sends the attach accept message to the UE, where the attach accept message includes indication information indicating that the suspend function is not allowed to be enabled, which is used to indicate that the UE cannot enable the suspend function.

In the technical implementation 4 of the present invention, the CPE determines, based on the movement track information of the UE, whether the suspend function of the UE is allowed to be enabled, to avoid enabling suspend functions of some user equipments that have excessively large movement areas or are frequently handed over. When the suspend function of the UE is allowed to be enabled, the CPE may set the suspension trigger condition information, to avoid blind triggering of the suspend state of the UE, and further reduce unnecessary signaling load and improve network performance.

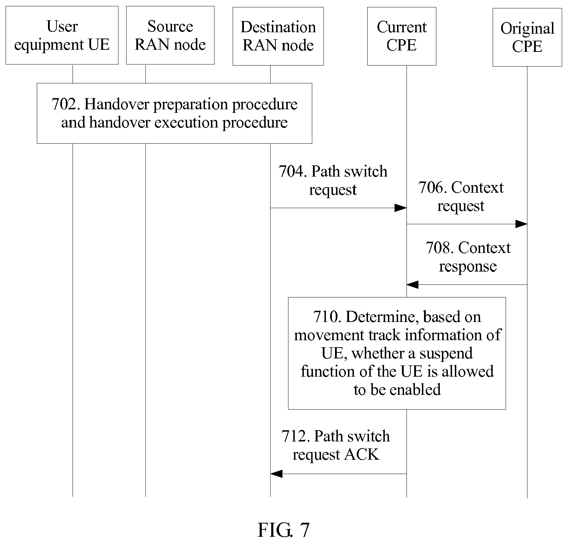

With reference to FIG. 7, the following describes a technical implementation 5 provided in an embodiment of the present invention.

In the technical implementation 5 in this embodiment of the present invention, when user equipment UE is handed over from one radio access network node RAN node to another RAN node, a current CPE that currently provides a service for the UE determines, based on movement track information of the UE, whether a suspend function of the UE is allowed to be enabled, and sends a result of the determining to a destination RAN node.

Step 702: UE, a source RAN node, and a destination RAN node perform a handover preparation procedure and a handover execution procedure, and the source RAN node sends a stored context of the UE and stored data of the UE to the destination RAN node.

Step 704: The destination RAN node sends a handover request message to a current CPE, such as a path switch request message, where the handover request message may include an identification information of the UE.

It should be noted that the identification information of the UE may be a permanent identifier allocated by an operator to the UE, such as an IMSI; or identification information of the UE may be a temporary identifier allocated by a network to the UE, such as a GUTI; or identification information of the UE may be information used to derive the identifier of the UE, which may be specifically information that is allocated by a network to the UE and that may be used to identify the UE, such as a TEID or an IP address.

Step 706: The current CPE sends a context request message to an original CPE that previously provides a service for the UE, to request to obtain a context (Context) of the UE.

Optionally, there is a case in which the original CPE and the current CPE are a same CPE entity. For example, the UE is still in a service area of the original CPE after the UE is handed over from one RAN node to another RAN node. In this case, the current CPE does not initiate the context request message, but obtains the context of the UE from data locally stored in the CPE.

Step 708: The original CPE sends a context response message to the current CPE, and sends the context of the UE to the current CPE, where the context of the UE may include movement track information of the UE.

Step 710: The current CPE determines, based on the movement track information of the UE, whether a suspend function of the UE is allowed to be enabled.

Similar to the implementation 3 or 4 in the embodiment of the present invention, if the movement track information of the UE indicates that the UE moves excessively fast or is frequently handed over, the current CPE determines that the suspend function of the UE is not allowed to be enabled, to avoid frequently performing a handover procedure to maintain a suspend state of the UE. Correspondingly, if a movement track of the UE indicates that the UE is relatively fixed or is rarely handed over, the current CPE determines that the suspend function of the UE is allowed to be enabled.

Step 712: The current CPE sends a result of the determining in Step 710 to the destination RAN node by using a handover request acknowledgement message such as a path switch request ACK message. Specifically, there may be the following two cases: 712 (a) and 712 (b).

Step 712 (a): If the current CPE determines, in Step 710, that the suspend function of the UE is allowed to be enabled, the handover request acknowledgement message sent by the current CPE to the destination RAN node includes indication information indicating that the suspend function is allowed to be enabled, which is used to indicate that the destination RAN node can enable the suspend function of the UE.

Optionally, the handover request acknowledgement message may further include suspension trigger condition information, used to indicate a condition under which the destination RAN node can trigger the UE to enter the suspend state; or may include network topology information, where the destination RAN node may use the network topology information to determine an area in which the suspend state of the UE can be maintained.

Step 712 (b): As another possible result, if the current CPE determines, in Step 710, that the suspend function of the UE is not allowed to be enabled, the handover request acknowledgement message sent by the current CPE to the destination RAN node includes indication information indicating that the suspend function is not allowed to be enabled.

In the technical implementation 5 of the present invention, when the UE is handed over from the source RAN node to the destination RAN node, the CPE determines, based on the movement track information of the UE, whether the suspend function of the UE is allowed to be enabled, and sends the result of the determining to the destination RAN node to which the UE is handed over, to avoid enabling suspend functions for some user equipments that have excessively large movement areas or are frequently handed over, thereby reducing signaling load and improving network performance. When the suspend function of the UE is allowed to be enabled, the CPE may set the suspension trigger condition information, to avoid blind triggering of the suspend state of the UE; and may further set, by using the network topology information, the area in which the suspend state of the UE can be maintained, to further reduce unnecessary signaling load and improve network performance.

It should be noted that the solutions in the foregoing implementations are as follows: The CPE determines, based on the information about a service requested by the UE, the device type information of the UE, the terminal capability information of the UE, the network capability information, or the movement track information of the UE, whether the suspend function is allowed to be enabled for the UE. As described earlier in this specification, the CPE may also determine, based on a combination of some of the foregoing information, whether the suspend function is allowed to be enabled for the UE. For example, the CPE may determine, with reference to the device type information of the UE and the movement track information of the UE, whether the suspend function of the UE is allowed to be enabled.

An application scenario of logistics tracking is used as an example. A logistics company may place an IoT device serving as a sensor on a parcel, and the IoT device may be considered as the user equipment UE in the embodiments of the present invention. The IoT device, namely, the UE periodically reports a location of the parcel, to track and grasp logistics information of the parcel. If the parcel resides in a logistics distribution center such as a dock or a station for a long time, a location of the UE does not change much, and a network side can enable the suspend function for the UE. However, if the parcel is in a transport state, such as in a car or on a railway, the UE moves excessively fast in this case, and consequently it is not suitable for enabling the suspend function for the UE. Therefore, in the scenario of the logistics tracking, the CPE on the network side may determine, with reference to the device type information of the UE and the movement track information of the UE, whether the suspend function of the UE is allowed to be enabled. Specifically, the CPE may first determine, based on the device type information of the UE, whether the suspend function of the UE is allowed to be enabled, and further perform determining based on the movement track information of the UE.

The above-mentioned local advertisement push service provided within a specific shopping mall is used as an example. The CPE may determine, based on both the service information of the UE and the movement track information of the UE, whether the suspend function of the UE is allowed to be enabled. For example, if a service requested by the UE is a service strongly correlated to a location, and the movement track information of the UE indicates that the UE moves excessively fast or is frequently handed over, the CPE may determine that the suspend function of the UE is not allowed to be enabled. For another case, if a service requested by the UE is not a service strongly correlated to a location, or if a service requested by the UE is a service strongly correlated to a location, but the movement track information of the UE indicates that a location of the UE is relatively fixed, the CPE determines that the suspend function of the UE is allowed to be enabled.

Further, the CPE may also determine, based on both the information about a service requested by the UE and the device type information of the UE, whether the suspend function of the UE is allowed to be enabled. For some UEs, such as some IoT devices, a service usually requested or performed by the IoT device is a service in which data is periodically reported. In this case, the CPE may determine that a suspend function of the IoT device is allowed to be enabled. However, in some special cases, for example, the IoT device encounters a fault alarm or is in a remote control state, the IoT device needs to always maintain a connected state based on a service requirement. In this case, the CPE may determine that a suspend function of the IoT device is not allowed to be enabled.

It is easily aware that the units and algorithm steps in the examples described with reference to the embodiments disclosed in this specification can be implemented in a form of hardware or a combination of hardware and computer software in the present invention. Whether the functions are performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

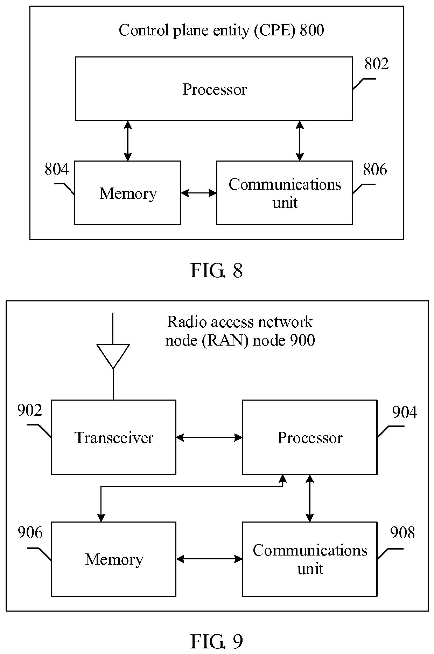

FIG. 8 is a possible schematic structural diagram of a control plane entity CPE 800 according to an embodiment of the present invention. The CPE 800 may include a processor 802, a memory 804, and a communications unit 806, which cooperate with each other to implement the technical solutions in the technical implementations in the foregoing embodiments of the present invention. For example, the processor 802 may be configured to determine whether a suspend function of user equipment UE is allowed to be enabled. The communications unit 806 is configured to: when the processor determines that the suspend function of the UE is allowed to be enabled, send a message to the UE or a radio access network node RAN node connected to the UE, where the message may include indication information indicating that the suspend function is allowed to be enabled. The memory 804 may be configured to store program code and data. When the program code runs, the CPE may be enabled to implement the technical solutions in the technical implementations in the foregoing embodiments of the present invention.

FIG. 9 is a possible schematic structural diagram of a RAN node 900 according to an embodiment of the present invention. The RAN node 900 includes a transceiver 902 and a processor 904. The transceiver 902 may be configured to support information transmitting and receiving between the RAN node 900 and user equipment UE in this embodiment of the present invention. The processor 904 may be configured to perform various functions used for communicating with the UE or another network device. In an uplink, an uplink signal from the UE is received by using an antenna, demodulated by the transceiver 902, and further processed by the processor 904, to restore service data and signaling information that are sent by the UE. In a downlink, the service data and the signaling message are processed by the processor 904 and demodulated by the transceiver 902 to generate a downlink signal, and the downlink signal is transmitted to the UE by using the antenna.

The RAN node 900 may further include a memory 906, which may be configured to store program code and data. When the program code runs, the RAN node 900 may be enabled to implement the technical solutions in the foregoing embodiments of the present invention. The RAN node 900 may further include a communications unit 908, configured to support a base station in communicating with another network entity, for example, configured to support the RAN node 900 in communicating with another communications network entity shown in FIG. 1, such as a control plane entity CPE. The processor 904 is further configured to perform the method described in the foregoing embodiments, and is configured to: when a message received by the communications unit 908 from a user plane entity CPE includes indication information indicating that the suspend function is allowed to be enabled, enable the suspend function of the UE based on the indication information.

It may be understood that FIG. 9 shows only a simplified design of the radio access network node. In actual application, the radio access network node may include any quantity of transceivers, processors, memories, communications unit, or the like, and all radio access network nodes that may implement the present invention fall within the protection scope of the present invention.

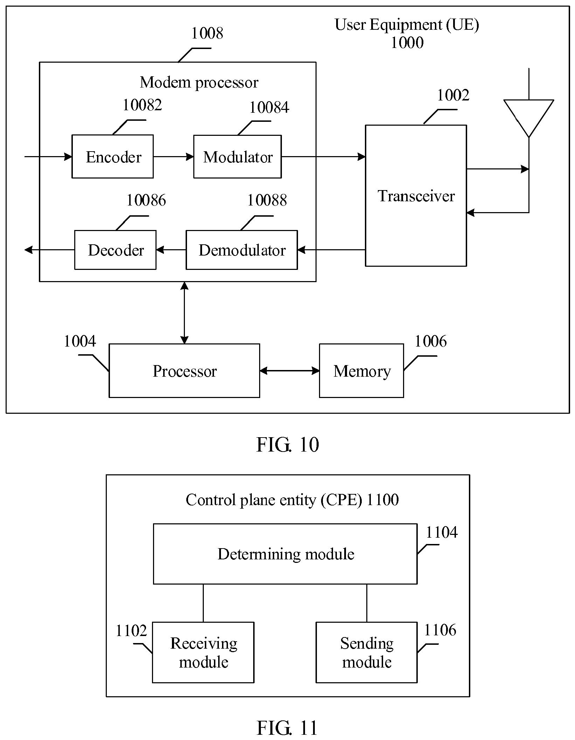

FIG. 10 is a simplified schematic diagram of a possible design structure of user equipment UE 1000 in the foregoing embodiments. The UE 1000 includes a transceiver 1002 and a processor 1004, and may further include a memory 1006 and a modem processor 1008.

The transceiver 1002 adjusts (for example, through analog conversion, filtering, amplification, and up-conversion) an output sampling and generates an uplink signal. The uplink signal is transmitted to the radio access network node RAN node in the embodiments of the present invention by using an antenna. In a downlink, the antenna receives a downlink signal transmitted by the RAN node. The transceiver 1002 adjusts (for example, through filtering, amplification, down-conversion, and digitization) a signal received from the antenna and provides an input sampling. In the modem processor 1008, an encoder 10082 receives service data and a signaling message that are to be sent in an uplink, and processes (for example, through formatting, coding, and interleaving) the service data and the signaling message. A modulator 10084 further processes (for example, through symbol mapping and modulation) coded service data and a coded signaling message, and provides an output sampling. A demodulator 10088 processes (for example, through demodulation) the input sampling and provides symbol estimation. A decoder 10086 processes (for example, through de-interleaving and decoding) the symbol estimation and provides decoded data and a decoded signaling message that are to be sent to the UE. The encoder 10082, the modulator 10084, the demodulator 10088, and the decoder 10086 may be implemented by the combined modem processor 1008. These units perform processing based on a radio access technology used in a radio access network.

The processor 1004 controls and manages an action of the UE, and is configured to perform processing performed by the UE in the embodiments of the present invention. When a message received from a user plane entity CPE includes indication information indicating that the suspend function is allowed to be enabled, the processor 1004 may enable the suspend function based on the indication information. The memory 1006 is configured to store program code and data. When the program code runs, the UE may be enabled to implement the technical solutions in the foregoing embodiments of the present invention.

The processor configured to perform functions of the CPE, the UE, and the RAN node in the embodiments of the present invention may be a central processing unit (CPU), a general purpose processor, a digital signal processor (DSP), an application-specific integrated circuit (ASIC), a field programmable gate array (FPGA), or another programmable logic device, a transistor logic device, a hardware component, or any combination thereof. It may implement or execute various examples of logical blocks, modules, and circuits that are described with reference to the contents disclosed in the present invention. The processor may also be a combination of computing functions, for example, a combination of one or more microprocessors or a combination of a DSP and a microprocessor.

The methods or algorithm steps described with reference to the content disclosed in the present invention may be implemented in a hardware manner, or may be implemented in a manner of executing a software instruction by a processor. The software instruction may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other forms well-known in the art. A storage medium used as an example is coupled to the processor, so that the processor can read information from the storage medium, and can write information into the storage medium. Certainly, the storage medium may be a part of the processor. The processor and the storage medium may be located in an ASIC. In addition, the ASIC may be located in user equipment. Certainly, the processor and the storage medium may exist in the user equipment as discrete components.

FIG. 11 is a possible schematic structural diagram of a control plane entity CPE 1100 according to an embodiment of the present invention. The CPE 1100 includes a receiving module 1102, a determining module 1104, and a sending module 1106.

The receiving module 1102 is configured to receive a request message, where the request message includes identification information of user equipment.

The determining module 1104 is configured to determine whether a suspend function of the user equipment UE corresponding to the identification information is allowed to be enabled.

If the determining module 1104 determines that the suspend function of the UE is allowed to be enabled, the sending module 1106 is configured to send a message to the UE or a radio access network node RAN node connected to the UE, where the message includes indication information indicating that the suspend function is allowed to be enabled.

Optionally, the determining module 1104 may determine, based on one or a combination of the following information, whether the suspend function of the UE is allowed to be enabled: device type information of the UE, movement track information of the UE, information about a service requested by the UE, terminal capability information of the UE, or network capability information.

Optionally, the message further includes suspension trigger condition information, used to indicate a condition under which the RAN node can trigger enabling of the suspend function of the UE.

Optionally, the message further includes network topology information, used to instruct the RAN node to set, based on the network topology information, an area in which a suspend state of the UE can be maintained.

Optionally, if the determining module 1104 determines that the suspend function of the UE is not allowed to be enabled, the sending module 1106 sends indication information indicating that the suspend function is not allowed to be enabled to the UE or the RAN node connected to the UE.

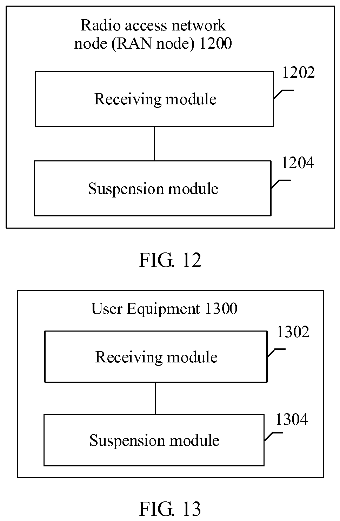

FIG. 12 is a possible schematic structural diagram of a radio network access node RAN node 1200 according to an embodiment of the present invention. The RAN node 1200 includes a receiving module 1202 and a suspension module 1204.

The receiving module 1202 is configured to receive a message sent by a user plane entity CPE, where the message includes indication information.

If the indication information indicates that a suspend function of the UE is allowed to be enabled, the suspension module 1204 enables the suspend function of the UE based on the indication information.

Optionally, the message further includes suspension trigger condition information, used to indicate a condition under which the RAN node can trigger enabling of the suspend function of the UE.

Optionally, the message further includes network topology information, used to instruct the RAN node to set, based on the network topology information, an area in which a suspend state of the UE can be maintained.

FIG. 13 is a simplified schematic diagram of a possible designed structure of user equipment UE 1300 in the foregoing embodiments. The UE 1300 includes a receiving module 1302 and a suspension module 1304.

The receiving module 1302 is configured to receive a message sent by a user plane entity CPE, where the message includes indication information.

If the indication information indicates that the suspend function is allowed to be enabled, the suspension module 1304 enables the suspend function based on the indication information.

Optionally, the message further includes suspension trigger condition information, used to indicate a condition under which the UE can trigger enabling of the suspend function.

Compared with the prior art in which suspend functions of all UEs are allowed to be enabled by default, the control plane entity CPE and the radio access network node RAN node provided in the embodiments of the present invention cooperate with each other, and the CPE determines, based on service information, device type information of the UE, terminal capability information, network capability information, movement track information of the UE, or the like, whether the suspend function of the UE is allowed to be enabled. According to the solutions in the embodiments of the present invention, the suspend function of the UE may not be allowed to be enabled for those cases in which signaling load may be relatively large because the suspend state of the UE is maintained, so as to reduce signaling load and improve network performance.

In the foregoing embodiments of the present invention, a result of the determining may further include the suspension trigger condition information, used to indicate the condition under which the suspend function of the UE can be enabled, that is, a time at which the UE triggers entering of the suspend state is set, so as to avoid blind triggering of the suspend state of the UE, and reduce signaling load required for maintaining the suspend state of the UE, thereby improving network performance. The result of the determining may further include the network topology information to set the area in which the suspend state of the UE can be maintained. Within the area, the UE can maintain the suspend state and does not need to notify a core network. This can avoid a problem that the UE still needs to maintain the suspend state outside the area, so as to reduce improper signaling load and improve network performance.

A person skilled in the art should be aware that in one or more of the foregoing examples, the functions described in the present invention may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

The objectives, technical solutions, and benefit effects of the present invention are further described in detail in the foregoing specific embodiments. It should be understood that the foregoing descriptions are merely specific embodiments of the present invention, but are not intended to limit the protection scope of the present invention.

## Claims

1. A communication method, comprising:
receiving, by a control plane entity, CPE, a request message, wherein the request message comprises identification information of user equipment, UE;
determining, by the CPE, whether a suspend function of the UE corresponding to the identification information is allowed to be enabled; and
if the CPE determines that the suspend function of the UE is allowed to be enabled, sending, by the CPE, a message to a radio access network node, RAN node, connected to the UE, wherein the message comprises indication information indicating that the suspend function is allowed to be enabled.

2. The method according to claim 1, wherein the CPE determines, based on one or a combination of the following information, whether the suspend function of the UE is allowed to be enabled:
device type information of the UE, movement track information of the UE, information about a service requested by the UE, terminal capability information of the UE, or network capability information.

3. The method according to claim 1 or 2, wherein the message further comprises suspension trigger condition information, used to indicate a condition under which the RAN node can trigger enabling of the suspend function of the UE.

4. The method according to any one of claims 1 to 3, wherein the message further comprises network topology information, used to instruct the RAN node to set, based on the network topology information, an area in which a suspend state of the UE can be maintained.

5. A communication method, comprising:
receiving, by a control plane entity, CPE, a request message, wherein the request message comprises identification information of user equipment;
determining, by the CPE, whether a suspend function of the user equipment, UE, corresponding to the identification information is allowed to be enabled; and
if the CPE determines that the suspend function of the UE is allowed to be enabled, sending, by the CPE, a message to the UE, wherein the message comprises indication information indicating that the suspend function is allowed to be enabled.

6. The method according to claim 5, wherein the CPE determines, based on one or a combination of the following information, whether the suspend function of the UE is allowed to be enabled:
device type information of the UE, movement track information of the UE, information about a service requested by the UE, terminal capability information of the UE, or network capability information.

7. The method according to claim 5 or 6, wherein the message further comprises suspension trigger condition information, used to indicate a condition under which the UE can trigger enabling of the suspend function.

8. A communication method, comprising:
receiving, by a radio access network node, RAN node, connected to user equipment, UE, a message sent by a control plane entity, CPE, wherein the message comprises indication information; and
if the indication information indicates that a suspend function of the UE is allowed to be enabled, enabling, by the RAN node, the suspend function of the UE based on the indication information.

9. The method according to claim 8, wherein the message further comprises suspension trigger condition information, used to indicate a condition under which the RAN node can trigger enabling of the suspend function of the UE.

10. The method according to claim 8 or 9, wherein the message further comprises network topology information, used to instruct the RAN node to set, based on the network topology information, an area in which a suspend state of the UE can be maintained.

11. A communication method, comprising:
receiving, by user equipment, UE, a message sent by a control plane entity, CPE, wherein the message comprises indication information; and
if the indication information indicates that suspend function is allowed to be enabled, enabling, by the UE, the suspend function based on the indication information.

12. The method according to claim 11, wherein the message further comprises suspension trigger condition information, used to indicate a condition under which the UE can trigger enabling of the suspend function.

13. A control plane entity, CPE (106), wherein the CPE comprises a receiving module, a determining module, and a sending module;
the receiving module is configured to receive a request message, wherein the request message comprises identification information of user equipment, UE (102);
the determining module is configured to determine whether a suspend function of the UE corresponding to the identification information is allowed to be enabled; and
if the determining module determines that the suspend function of the UE is allowed to be enabled, the sending module is configured to send a message to the UE or a radio access network node, RAN (104) node, connected to the UE, wherein the message comprises indication information indicating that the suspend function is allowed to be enabled.

14. The CPE according to claim 13, wherein the determining module determines, based on one or a combination of the following information, whether the suspend function of the UE is allowed to be enabled:
device type information of the UE, movement track information of the UE, information about a service requested by the UE, terminal capability information of the UE, or network capability information.

15. The CPE according to claim 13 or 14, wherein the message further comprises suspension trigger condition information, used to indicate a condition under which the RAN node can trigger enabling of the suspend function of the UE.

16. The CPE according to any one of claims 13 to 15, wherein the message further comprises network topology information, used to instruct the RAN node to set, based on the network topology information, an area in which a suspend state of the UE can be maintained.

17. A radio access network node, RAN (104) node, wherein the RAN node comprises a receiving module and a suspension module;
the receiving module is configured to receive a message sent by a control plane entity, CPE (106), wherein the message comprises indication information; and
if the indication information indicates that a suspend function of user equipment, UE (102), is allowed to be enabled, the suspension module enables the suspend function of the UE based on the indication information.

18. The RAN node according to claim 17, wherein the message further comprises suspension trigger condition information, used to indicate a condition under which the RAN node can trigger enabling of the suspend function of the UE.

19. The RAN node according to claim 17 or 18, wherein the message further comprises network topology information, used to instruct the RAN node to set, based on the network topology information, an area in which a suspend state of the UE can be maintained.

20. A user equipment, UE (102),
wherein the UE comprises a receiving module and a suspension module;
the receiving module is configured to receive a message sent by a control plane entity, CPE (106), wherein the message comprises indication information; and
if the indication information indicates that the suspend function is allowed to be enabled, the suspension module enables the suspend function based on the indication information.

21. The UE according to claim 20, wherein the message further comprises suspension trigger condition information, used to indicate a condition under which the UE can trigger enabling of the suspend function.

## Patentansprüche

1. Kommunikationsverfahren, umfassend:
Empfangen einer Anforderungsnachricht durch eine Steuerebeneneinheit (Control Plane Entity - CPE), wobei die Anforderungsnachricht Identifikationsinformationen des Benutzergeräts (User Equipment - UE) umfasst;
Bestimmen durch die CPE, ob eine Ruhezustandsfunktion (suspend function) des UE, das den Identifikationsinformationen entspricht, aktiviert werden darf; und
wenn die CPE bestimmt, dass die Ruhezustandsfunktion des UE aktiviert werden darf, Senden einer Nachricht an einen mit dem UE verbundenen Knoten eines Funkzugangsnetzwerks (Radio-Access-Network-Knoten - RAN-Knoten) durch die CPE, wobei die Nachricht Angabeinformationen enthält, die angeben, dass die Ruhezustandsfunktion aktiviert werden darf.

2. Verfahren nach Anspruch 1, wobei die CPE basierend auf einer oder einer Kombination der folgenden Informationen bestimmt, ob die Ruhezustandsfunktion des UE aktiviert werden darf:
Vorrichtungstypinformationen des UE, Bewegungsverfolgungsinformationen des UE, Informationen über einen vom UE angeforderten Dienst, Endgerätefähigkeitsinformationen des UE oder Netzwerkfähigkeitsinformationen.

3. Verfahren nach Anspruch 1 oder 2, wobei die Nachricht ferner Ruhezustandsauslösebedingungsinformationen umfasst, die verwendet werden, um eine Bedingung anzugeben, unter der der RAN-Knoten das Aktivieren der Ruhezustandsfunktion des UE auslösen kann.

4. Verfahren nach einem der Ansprüche 1 bis 3, wobei die Nachricht ferner Netzwerktopologieinformationen umfasst, die verwendet werden, um den RAN-Knoten anzuweisen, basierend auf den Netzwerktopologieinformationen einen Bereich festzulegen, in dem ein Ruhezustand des UE aufrechterhalten werden kann.

5. Kommunikationsverfahren, umfassend:
Empfangen einer Anforderungsnachricht durch eine Steuerebeneneinheit, CPE, wobei die Anforderungsnachricht Identifikationsinformationen des Benutzergeräts umfasst;
Bestimmen durch die CPE, ob eine Ruhezustandsfunktion des Benutzergeräts, UE, das den Identifikationsinformationen entspricht, aktiviert werden darf; und
wenn die CPE bestimmt, dass die Ruhezustandsfunktion des UE aktiviert werden darf, Senden einer Nachricht an das UE durch die CPE, wobei die Nachricht Angabeinformationen enthält, die angeben, dass die Ruhezustandsfunktion aktiviert werden darf.

6. Verfahren nach Anspruch 5, wobei die CPE basierend auf einer oder einer Kombination der folgenden Informationen bestimmt, ob die Ruhezustandsfunktion des UE aktiviert werden darf:
Vorrichtungstypinformationen des UE, Bewegungsverfolgungsinformationen des UE, Informationen über einen vom UE angeforderten Dienst, Endgerätefähigkeitsinformationen des UE oder Netzwerkfähigkeitsinformationen.

7. Verfahren nach Anspruch 5 oder 6, wobei die Nachricht ferner Ruhezustandsauslösebedingungsinformationen umfasst, die verwendet werden, um eine Bedingung anzugeben, unter der das UE das Aktivieren der Ruhezustandsfunktion auslösen kann.

8. Kommunikationsverfahren, umfassend:
Empfangen einer Nachricht, die von einer Steuerebeneneinheit, CPE, gesendet wird, durch einen Funkzugangsnetzwerkknoten, RAN-Knoten, der mit einem Benutzergerät, UE, verbunden ist, wobei die Nachricht Angabeinformationen umfasst; und
wenn die Angabeinformationen angeben, dass eine Ruhezustandsfunktion des UE aktiviert werden darf, Aktivieren der Ruhezustandsfunktion des UE durch den RAN-Knoten basierend auf den Angabeinformationen.

9. Verfahren nach Anspruch 8, wobei die Nachricht ferner Ruhezustandsauslösebedingungsinformationen umfasst, die verwendet werden, um eine Bedingung anzugeben, unter der der RAN-Knoten das Aktivieren der Ruhezustandsfunktion des UE auslösen kann.

10. Verfahren nach Anspruch 8 oder 9, wobei die Nachricht ferner Netzwerktopologieinformationen umfasst, die verwendet werden, um den RAN-Knoten anzuweisen, basierend auf den Netzwerktopologieinformationen einen Bereich festzulegen, in dem ein Ruhezustand des UE aufrechterhalten werden kann.

11. Kommunikationsverfahren, umfassend:
Empfangen einer Nachricht, die von einer Steuerebeneneinheit, CPE, gesendet wird, durch ein Benutzergerät, UE, wobei die Nachricht Angabeinformationen umfasst; und
wenn die Angabeinformationen angeben, dass eine Ruhezustandsfunktion aktiviert werden darf, Aktivieren der Ruhezustandsfunktion durch das UE basierend auf den Angabeinformationen.

12. Verfahren nach Anspruch 11, wobei die Nachricht ferner Ruhezustandsauslösebedingungsinformationen umfasst, die verwendet werden, um eine Bedingung anzugeben, unter der das UE das Aktivieren der Ruhezustandsfunktion auslösen kann.

13. Steuerebeneneinheit, CPE (106),
wobei die CPE ein Empfangsmodul, ein Bestimmungsmodul und ein Sendemodul umfasst;
das Empfangsmodul dazu konfiguriert ist, eine Anforderungsnachricht zu empfangen, wobei die Anforderungsnachricht Identifikationsinformationen des Benutzergeräts, UE (102), umfasst;
das Bestimmungsmodul dazu konfiguriert ist, zu bestimmen, ob eine Ruhezustandsfunktion des UE, das den Identifikationsinformationen entspricht, aktiviert werden darf; und
wenn das Bestimmungsmodul bestimmt, dass die Ruhezustandsfunktion des UE aktiviert werden darf, ist das Sendemodul dazu konfiguriert, eine Nachricht an das UE oder einen Funkzugangsnetzwerkknoten, RAN-Knoten (104), zu senden, der mit dem UE verbunden ist, wobei die Nachricht Angabeinformationen umfasst, die angeben, dass die Ruhezustandsfunktion aktiviert werden darf.

14. CPE nach Anspruch 13, wobei das Bestimmungsmodul basierend auf einer oder einer Kombination der folgenden Informationen bestimmt, ob die Ruhezustandsfunktion des UE aktiviert werden darf:
Vorrichtungstypinformationen des UE, Bewegungsverfolgungsinformationen des UE, Informationen über einen vom UE angeforderten Dienst, Endgerätefähigkeitsinformationen des UE oder Netzwerkfähigkeitsinformationen.

15. CPE nach Anspruch 13 oder 14, wobei die Nachricht ferner Ruhezustandsauslösebedingungsinformationen umfasst, die verwendet werden, um eine Bedingung anzugeben, unter der der RAN-Knoten das Aktivieren der Ruhezustandsfunktion des UE auslösen kann.

16. CPE nach einem der Ansprüche 13 bis 15, wobei die Nachricht ferner Netzwerktopologieinformationen umfasst, die verwendet werden, um den RAN-Knoten anzuweisen, basierend auf den Netzwerktopologieinformationen einen Bereich festzulegen, in dem ein Ruhezustand des UE aufrechterhalten werden kann.

17. Funkzugangsnetzwerkknoten, RAN-Knoten (104), wobei der RAN-Knoten ein Empfangsmodul und ein Ruhezustandsmodul umfasst;
das Empfangsmodul dazu konfiguriert ist, eine Nachricht zu empfangen, die von einer Steuerebeneneinheit, CPE (106), gesendet wird, wobei die Nachricht Angabeinformationen umfasst; und
wenn die Angabeinformationen angeben, dass eine Ruhezustandsfunktion des Benutzergeräts, UE (102), aktiviert werden darf, aktiviert das Ruhezustandsmodul die Ruhezustandsfunktion des UE basierend auf den Angabeinformationen.

18. RAN-Knoten nach Anspruch 17, wobei die Nachricht ferner Ruhezustandsauslösebedingungsinformationen umfasst, die verwendet werden, um eine Bedingung anzugeben, unter der der RAN-Knoten das Aktivieren der Ruhezustandsfunktion des UE auslösen kann.

19. RAN-Knoten nach Anspruch 17 oder 18, wobei die Nachricht ferner Netzwerktopologieinformationen umfasst, die verwendet werden, um den RAN-Knoten anzuweisen, basierend auf den Netzwerktopologieinformationen einen Bereich festzulegen, in dem ein Ruhezustand des UE aufrechterhalten werden kann.

20. Benutzergerät, UE (102),
wobei das UE ein Empfangsmodul und ein Ruhezustandsmodul umfasst;
das Empfangsmodul dazu konfiguriert ist, eine Nachricht zu empfangen, die von einer Steuerebeneneinheit, CPE (106), gesendet wird, wobei die Nachricht Angabeinformationen umfasst; und
wenn die Angabeinformationen angeben, dass die Ruhezustandsfunktion aktiviert werden darf, aktiviert das Ruhezustandsmodul die Ruhezustandsfunktion basierend auf den Angabeinformationen.

21. UE nach Anspruch 20, wobei die Nachricht ferner Ruhezustandsauslösebedingungsinformationen umfasst, die verwendet werden, um eine Bedingung anzugeben, unter der das UE das Aktivieren der Ruhezustandsfunktion auslösen kann.

## Revendications

1. Procédé de communication, comprenant :
la réception, par une entité de plan de commande, CPE, d'un message de demande, dans lequel le message de demande comprend des informations d'identification d'équipement utilisateur, UE ;
la détermination, par la CPE, du fait qu'une fonction de suspension de l'UE correspondant aux informations d'identification peut être activée ou non ; et
si la CPE détermine que la fonction de suspension de l'UE peut être activée, l'envoi, par la CPE, d'un message à un nœud de réseau d'accès radio, nœud RAN, connecté à l'UE, dans lequel le message comprend des informations d'indication indiquant que la fonction de suspension peut être activée.

2. Procédé selon la revendication 1, dans lequel la CPE détermine, sur la base d'une information ou d'une combinaison des informations suivantes, si la fonction de suspension de l'UE peut être activée ou non :
des informations de type de dispositif de l'UE, des informations de suivi de mouvement de l'UE, des informations concernant un service demandé par l'UE, des informations de capacité de terminal de l'UE ou des informations de capacité de réseau.

3. Procédé selon la revendication 1 ou 2, dans lequel le message comprend en outre des informations de condition de déclenchement de suspension, utilisées pour indiquer une condition dans laquelle le nœud RAN peut déclencher l'activation de la fonction de suspension de l'UE.

4. Procédé selon l'une quelconque des revendications 1 à 3, dans lequel le message comprend en outre des informations de topologie de réseau, utilisées pour ordonner au nœud RAN de définir, sur la base des informations de topologie de réseau, une zone dans laquelle un état de suspension de l'UE peut être maintenu.

5. Procédé de communication, comprenant:
la réception, par une entité de plan de commande, CPE, d'un message de demande, dans lequel le message de demande comprend des informations d'identification d'équipement utilisateur ;
la détermination, par la CPE, du fait qu'une fonction de suspension de l'équipement utilisateur, UE, correspondant aux informations d'identification peut être activée ou non ; et
si la CPE détermine que la fonction de suspension de l'UE peut être activée, l'envoi, par la CPE, d'un message à l'UE, dans lequel le message comprend des informations d'indication indiquant que la fonction de suspension peut être activée.

6. Procédé selon la revendication 5, dans lequel la CPE détermine, sur la base d'une information ou d'une combinaison des informations suivantes, si la fonction de suspension de l'UE peut être activée ou non:
des informations de type de dispositif de l'UE, des informations de suivi de mouvement de l'UE, des informations concernant un service demandé par l'UE, des informations de capacité de terminal de l'UE ou des informations de capacité de réseau.

7. Procédé selon la revendication 5 ou 6, dans lequel le message comprend en outre des informations de condition de déclenchement de suspension, utilisées pour indiquer une condition dans laquelle l'UE peut déclencher l'activation de la fonction de suspension.

8. Procédé de communication, comprenant:
la réception, par un nœud de réseau d'accès radio, nœud RAN, connecté à un équipement utilisateur, UE, d'un message envoyé par une entité de plan de commande, CPE, dans lequel le message comprend des informations d'indication ; et
si les informations d'indication indiquent qu'une fonction de suspension de l'UE peut être activée, l'activation, par le nœud RAN, de la fonction de suspension de l'UE sur la base des informations d'indication.

9. Procédé selon la revendication 8, dans lequel le message comprend en outre des informations de condition de déclenchement de suspension, utilisées pour indiquer une condition dans laquelle le nœud RAN peut déclencher l'activation de la fonction de suspension de l'UE.

10. Procédé selon la revendication 8 ou 9, dans lequel le message comprend en outre des informations de topologie de réseau, utilisées pour ordonner au nœud RAN de définir, sur la base des informations de topologie de réseau, une zone dans laquelle un état de suspension de l'UE peut être maintenu.

11. Procédé de communication, comprenant :
la réception, par un équipement utilisateur, UE, d'un message envoyé par une entité de plan de commande, CPE, dans lequel le message comprend des informations d'indication ; et
si les informations d'indication indiquent qu'une fonction de suspension peut être activée, l'activation, par l'UE, de la fonction de suspension sur la base des informations d'indication.

12. Procédé selon la revendication 11, dans lequel le message comprend en outre des informations de condition de déclenchement de suspension, utilisées pour indiquer une condition dans laquelle l'UE peut déclencher l'activation de la fonction de suspension.

13. Entité de plan de commande, CPE (106),
la CPE comprenant un module de réception, un module de détermination et un module d'envoi ;
le module de réception est conçu pour recevoir un message de demande, dans laquelle le message de demande comprend des informations d'identification de l'équipement utilisateur, UE (102) ;
le module de détermination est conçu pour déterminer si une fonction de suspension de l'UE correspondant aux informations d'identification peut être activée ou non ; et
si le module de détermination détermine que la fonction de suspension de l'UE peut être activée, le module d'envoi est conçu pour envoyer un message à l'UE ou à un nœud de réseau d'accès radio, nœud RAN (104), connecté à l'UE, dans laquelle le message comprend des informations d'indication indiquant que la fonction de suspension peut être activée.

14. CPE selon la revendication 13, dans laquelle le module de détermination détermine, sur la base d'une information ou d'une combinaison des informations suivantes, si la fonction de suspension de l'UE peut être activée ou non:
des informations de type de dispositif de l'UE, des informations de suivi de mouvement de l'UE, des informations concernant un service demandé par l'UE, des informations de capacité de terminal de l'UE ou des informations de capacité de réseau.

15. CPE selon la revendication 13 ou 14, dans laquelle le message comprend en outre des informations de condition de déclenchement de suspension, utilisées pour indiquer une condition dans laquelle le nœud RAN peut déclencher l'activation de la fonction de suspension de l'UE.

16. CPE selon l'une quelconque des revendications 13 à 15, dans laquelle le message comprend en outre des informations de topologie de réseau, utilisées pour ordonner au nœud RAN de définir, sur la base des informations de topologie de réseau, une zone dans laquelle un état de suspension de l'UE peut être maintenu.

17. Nœud de réseau d'accès radio, nœud RAN (104), le nœud RAN comprenant un module de réception et un module de suspension ;
le module de réception est conçu pour recevoir un message envoyé par une entité de plan de commande, CPE (106), dans lequel le message comprend des informations d'indication ; et
si les informations d'indication indiquent qu'une fonction de suspension de l'équipement utilisateur, UE (102), peut être activée, le module de suspension active la fonction de suspension de l'UE sur la base des informations d'indication.

18. Nœud RAN selon la revendication 17, dans lequel le message comprend en outre des informations de condition de déclenchement de suspension, utilisées pour indiquer une condition dans laquelle le nœud RAN peut déclencher l'activation de la fonction de suspension de l'UE.

19. Nœud RAN selon la revendication 17 ou 18, dans lequel le message comprend en outre des informations de topologie de réseau, utilisées pour ordonner au nœud RAN de définir, sur la base des informations de topologie de réseau, une zone dans laquelle un état de suspension de l'UE peut être maintenu.

20. Équipement utilisateur, UE (102),
dans lequel l'UE comprend un module de réception et un module de suspension ;
le module de réception est conçu pour recevoir un message envoyé par une entité de plan de commande, CPE (106), dans lequel le message comprend des informations d'indication ; et
si les informations d'indication indiquent que la fonction de suspension peut être activée, le module de suspension active la fonction de suspension sur la base des informations d'indication.

21. UE selon la revendication 20, dans lequel le message comprend en outre des informations de condition de déclenchement de suspension, utilisées pour indiquer une condition dans laquelle l'UE peut déclencher l'activation de la fonction de suspension.
